# EUROPEAN PATENT SPECIFICATION

(11) **EP 4 586 555 B1**
(45) Date of publication and mention of the grant of the patent: **28.10.2026**
(21) Application number: 25179185.1
(22) Date of filing: 20.06.2019
(51) Int. Cl.: H04L 45/00, H04L 12/46, H04L 9/40

(54) **SEGMENT ROUTING USING SECURITY SEGMENT IDENTIFIERS**
SEGMENTROUTING MIT SICHERHEITSSEGMENTIDENTIFIKATOREN
ROUTAGE DE SEGMENTS À L'AIDE D'IDENTIFICATEURS DE SEGMENTS DE SÉCURITÉ

(30) Priority: 26.06.2018 US 201816019125
(43) Date of publication of application: 16.07.2025
(62) Document number(s) of the earlier application(s) in accordance with Art. 76 EPC: 19736895.4 / 3 815 308
(73) Proprietor: Cisco Technology, Inc., San Jose, CA 95134-1706 (US)
(72) Inventor: FILSFILS, Clarence, 1150 Brussels (BE); CAMARILLO GARVIA, Pablo, 28007 Madrid (ES); CLAD, Francois, 67200 Strasbourg (FR)
(74) Representative: Mathys & Squire

(56) References cited:
- WO-A1-2015/005839
- PREVIDI S ET AL: "IPv6 Segment Routing Header (SRH); draft-ietf-6man-segment-routing-header-06.txt", IPV6 SEGMENT ROUINTERNET ENGINEERING TASK FORCE, IETF; STANDARDWORKINGDRAFT, INTERNET SOCIETY (ISOC) 4, 13 March 2017 (2017-03-13), pages 1 - 35, XP015118521
- BROCKNERS S ET AL: "Proof of Transit; draft-ietf-sfc-proof-of-transit-00.txt", INTERNET ENGINEERING TASK FORCE, IETF; STANDARDWORKINGDRAFT, INTERNET SOCIETY (ISOC), 31 May 2018 (2018-05-31), pages 1 - 23, XP015126648

## Description

### TECHNICAL FIELD

The present disclosure relates generally to processing and sending of Internet Protocol (IP) packets in packet network, such as, but not limited to, according to a Segment Routing Policy.

### BACKGROUND

The communications industry is rapidly changing to adjust to emerging technologies and ever increasing customer demand. This customer demand for new applications and increased performance of existing applications is driving communications network and system providers to employ networks and systems having greater speed and capacity (e.g., greater bandwidth). In trying to achieve these goals, a common approach taken by many communications providers is to use packet switching technology. Packets are typically forwarded in a network based on one or more values representing network nodes or paths.

PREVIDI S ET AL: "IPv6 Segment Routing Header (SRH); draft-ietf-6mansegment-routing-header-06.txt", IPV6 SEGMENT ROUINTERNET ENGINEERING TASK FORCE, IETF; STANDARDWORKINGDRAFT, INTERNET SOCIETY (ISOC) 4, 13 March 2017, pages 1-35, XP015118521 describes how segment Routing can be applied to the IPv6 data plane using a new type of Routing Extension Header called the Segment Routing Header.

WO 2015/005839 A1 describes embodiments of nodes and methods in a node in a data telecommunication network. The method and embodiments thereof enables control of data packet traffic belonging to different access technologies to be sent with the same Quality of Service class over an aggregated encrypted Internet Security tunnel, IPsec tunnel. The received data packets are encrypting and encapsulating as payload in an IPdata packet to be sent over an aggregated encrypted IPsec tunnel, which header is marked with an access technology index comprising a code for the identified access technology of the one or more received data packets encrypted and encapsulated as payload in the IPsec tunnel and a hash identifier code enabling enhanced scheduling and routing.

BROCKNERS S ET AL: "Proof of Transit; draft-ietf-sfc-proof-oftransit- 00.txt", INTERNET ENGINEERING TASK FORCE, IETF; STANDARDWORKINGDRAFT, INTERNET SOCIETY (ISOC), 31 May 2018, pages 1-23, XP015126648 describes how several technologies such as Traffic Engineering (TE), Service Function Chaining (SFC), and policy based routing are used to steer traffic through a specific, user-defined path.

### OVERVIEW

Aspects of the invention are set out in the independent claims and preferred features are set out in the dependent claims. Features of one aspect may be applied to each aspect alone or in combination with other aspects.

Disclosed are, *inter alia,* methods, apparatus, and computer program associated with providing processing and network efficiencies in protecting Internet Protocol version 6 (IPv6) Segment Routing (SRv6) packets and functions using Security Segment Identifiers.

A first Segment Routing node formulates one or more Security Segment Identifiers for a secured portion of a particular Segment Routing packet, with these Security Segment Identifier(s) being included in a Segment List of the packet, which is then sent into a network.

A embodiment second Segment Routing node receives a particular Segment Routing packet. After authenticating the secured portion of the particular Segment Routing packet based on one or more Security Segment Identifiers included in a Segment List of the packet, the packet is not dropped, but is further processed typically according to a Segment Routing function. The second Segment Routing node formulates one or more integrity check value(s) by security processing the secured portion of the packet (e.g., mirroring this processing by the originating node). A comparison operation is performed between a first value based on the integrity check value (possibly exactly the integrity check value) and a second value based on the Security Segment Identifier(s) (possibly exactly the Security Segment Identifiers) in the Segment List of the received packet.

The IP Destination Address of the packet (i.e., in the outer IPv6 header of the received packet) and/or a current Segment Identifier includes an identifiable anti-replay value (e.g., a sequence number or portion thereof), which is verified as appropriate (e.g., within a sliding window) as part of the authentication process of the received packet.

Each of formulating the Security Segment Identifier(s) and integrity check value(s) includes processing each value or field of the secured portion of the packet using a one-way cryptographic hash function. A key that is pre-shared between the sending and second node is also input to the one-way cryptographic hash function. When a result of the hash function is greater than 128 bits, this result is shortened to a value that can be stored in a single Security Segment Identifier.

The secured portion of the packet includes the Destination Address and/or Source Address of the packet when said received by the second Segment Routing node; one or more Segment Identifiers (e.g., a Segment Identifier with a value of the Destination Address or a different value) in the Segments List of the packet; the Segments Left value corresponding to the Segments List; a Segment Routing Header group tag; a portion of an extended sequence number (e.g., possibly not included in the received packet but determined from the security association between the sending and second node); and/or other value(s) in the received packet (e.g., in a header or payload) or part of the security association.

Systems and apparatus for implementing the methods described herein, including network nodes, computer programs, computer program products, computer readable media and logic encoded on tangible media for implementing the methods are also described.

### BRIEF DESCRIPTION OF THE DRAWINGS

The appended claims set forth the features of one or more embodiments with particularity. The embodiment(s), together with its advantages, may be best understood from the following detailed description taken in conjunction with the accompanying drawings of which:
FIG. 1A illustrates a network operating according to one embodiment;
FIG. 1B illustrates a process;
FIG. 2A illustrates a packet switching device;
FIG. 2B illustrates an apparatus according to one embodiment;
FIG. 3A illustrates a Segment Identifier of a secured Segment Routing function;
FIG. 3B illustrates a Security Segment Identifier according to one embodiment;
FIG. 3C illustrates a Segment Routing packet according to one embodiment;
FIG. 4A illustrates a process;
FIG. 4B illustrates a process;
FIG. 4C illustrates a process according to one embodiment;
FIG. 5A illustrates a network operating according to one embodiment;
FIG. 5B illustrates packet processing of a packet according to one embodiment;
FIG. 5C illustrates packet processing of a packet according to one embodiment;
FIG. 5D illustrates packet processing of a packet according to one embodiment;
FIG. 5E illustrates packet processing of a packet according to one embodiment; and
FIG. 5F illustrates packet processing of a packet according to one embodiment.

### DETAILED DESCRIPTION

Disclosed are, *inter alia,* methods, apparatus, and computer program associated with providing processing and network efficiencies in protecting Internet Protocol version 6 (IPv6) Segment Routing (SRv6) packets and functions using Security Segment Identifiers.

As used herein Segment Routing includes using Internet Protocol version 6 (IPv6) addresses as Segment Identifiers (SIDs); in other words, as used herein, Segment Routing includes IPv6 Segment Routing (SRv6). As used herein, a Segment Routing node refers to a network node (e.g., router, server, appliance) that performs Segment Routing functionality, including, but not limited to, adding, updating, or removing a Segment Routing Header; performing a Segment Routing function identified by a Segment Identifier that is the IP Destination Address of an IP packet or is a Segment Identifier in a Segment Routing Header. Also, as used herein, an IP packet may or may not be a Segment Routing Packet; but a Segment Routing packet is an IP packet.

The term "outer IP header" of a packet refers to the IP header (not an Extension header) used in processing and forwarding of the packet, and does not refer to a header of a packet encapsulated (e.g., in the payload) of the packet. The terms "Destination Address" and "Source Address" respectively refer to the value of the IP Destination and Source Address fields of the outer IP header. The phrase "wherein the value, when the particular packet was said received by the particular node, of the Destination Address" refers to the IP Destination Address of the packet when the packet was received by the particular node, which may or may not be the same as the IP Destination Address of the packet when sent from the particular node.

The terms "node" and "network node" are used herein to refer to a router or host. The term "route" is used herein to refer to a fully or partially expanded prefix/route (e.g., 10.0.0.1 or 10.0.*.*), which is different than a "path" through the network which refers to a nexthop (e.g., next router) or complete path (e.g., traverse router A then router B, and so on). Also, the use of the term "prefix" without a qualifier herein refers to a fully or partially expanded prefix. Also, as used herein, "forwarding information" includes, but is not limited to, information describing how to process (e.g., forward, send, manipulate, modify, change, drop, copy, duplicate, receive) corresponding packets. In one embodiment, determining forwarding information is performed via an ingress lookup operation and an egress lookup operation. Also, the term "processing" when referring to processing of a packet process refers to a broad scope of operations performed in response to a packet, such as, but not limited to, forwarding/sending, dropping, manipulating/modifying/changing, receiving, duplicating, creating, applying one or more service or application functions to the packet or to the packet switching device (e.g., updating information), etc. Also, as used herein, the term processing in "parallel" is used in the general sense that at least a portion of two or more operations are performed overlapping in time.

As described herein, embodiments include various elements and limitations, with no one element or limitation contemplated as being a critical element or limitation. Each of the claims individually recites an aspect of the embodiment in its entirety. Moreover, some embodiments described may include, but are not limited to, *inter alia,* systems, networks, integrated circuit chips, embedded processors, ASICs, methods, and computer-readable media containing instructions. One or multiple systems, devices, components, etc., may comprise one or more embodiments, which may include some elements or limitations of a claim being performed by the same or different systems, devices, components, etc. A processing element may be a general processor, task-specific processor, a core of one or more processors, or other co-located, resource-sharing implementation for performing the corresponding processing. The embodiments described hereinafter embody various aspects and configurations, with the figures illustrating exemplary and non-limiting configurations. Computer-readable media and means for performing methods and processing block operations (e.g., a processor and memory or other apparatus configured to perform such operations) are disclosed and are in keeping with the extensible scope of the embodiments. The term "apparatus" is used consistently herein with its common definition of an appliance or device.

The steps, connections, and processing of signals and information illustrated in the figures, including, but not limited to, any block and flow diagrams and message sequence charts, may typically be performed in the same or in a different serial or parallel ordering and/or by different components and/or processes, threads, etc., and/or over different connections and be combined with other functions in other embodiments, unless this disables the embodiment or a sequence is explicitly or implicitly required (e.g., for a sequence of read the value, process said read value - the value must be obtained prior to processing it, although some of the associated processing may be performed prior to, concurrently with, and/or after the read operation). Also, nothing described or referenced in this document is admitted as prior art to this application unless explicitly so stated.

The term "one embodiment" is used herein to reference a particular embodiment, wherein each reference to "one embodiment" may refer to a different embodiment, and the use of the term repeatedly herein in describing associated features, elements and/or limitations does not establish a cumulative set of associated features, elements and/or limitations that each and every embodiment must include, although an embodiment typically may include all these features, elements and/or limitations. In addition, the terms "first," "second," etc., as well as "particular" and "specific" are typically used herein to denote different units (e.g., a first widget or operation, a second widget or operation, a particular widget or operation, a specific widget or operation). The use of these terms herein does not necessarily connote an ordering such as one unit, operation or event occurring or coming before another or another characterization, but rather provides a mechanism to distinguish between elements units. Moreover, the phrases "based on x" and "in response to x" are used to indicate a minimum set of items "x" from which something is derived or caused, wherein "x" is extensible and does not necessarily describe a complete list of items on which the operation is performed, etc. Additionally, the phrase "coupled to" is used to indicate some level of direct or indirect connection between two elements or devices, with the coupling device or devices modifying or not modifying the coupled signal or communicated information. Moreover, the term "or" is used herein to identify a selection of one or more, including all, of the conjunctive items. Additionally, the transitional term "comprising," which is synonymous with "including," "containing," or "characterized by," is inclusive or open-ended and does not exclude additional, unrecited elements or method steps. Finally, the term "particular machine," when recited in a method claim for performing steps, refers to a particular machine within the 35 USC § 101 machine statutory class.

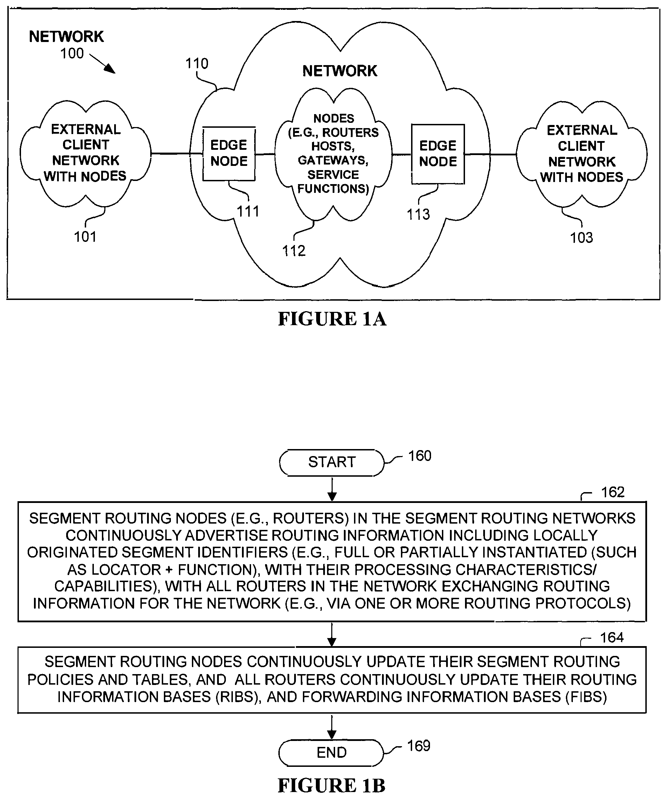

FIG. 1A illustrates a network 100 (e.g., an aggregation of one or more networks of one or more different entities) operating according to one embodiment. As shown, network 100 includes client networks 101 and 103 (which are the same network in one embodiment) communicatively coupled to Segment Routing (SR) provider network 110. In one embodiment, each of client networks 101 and 103 include hosts (e.g., end nodes) with upper-layer applications that communicate via network 100. In one embodiment, some of the hosts in client network 101 and/or 103 are SR-capable in that they can generate and process Segment Routing packets.

In one embodiment, Segment Routing network 110 (e.g., a provider network) includes Segment Routing edge nodes 111 and 113, and a network 112 of network nodes including SR-capable routers (and possibly some that are not SR-capable in that they do not process a Segment Routing header/complete Segment Identifier), SR gateways, service functions, and hosts (e.g., end nodes). In one embodiment, SR edge nodes 111 and 113 process packets received from networks 101 and 103, which may include encapsulating or otherwise processing these packets into SR packets such as by adding a SR header (and possibly another IP header) to these packets according to a data plane ascertained Segment Routing policy, and subsequently decapsulating or removing a Segment Routing header (and possibly another IP header) and forwarding the native (Segment Routing or IP) packets into network 101 and 103.

In one embodiment and in response to receiving a packet, a Segment Routing edge node 111, 113 and/or a Segment Routing node within network 112 determines a Segment Routing policy (e.g., list of complete Segment Identifiers) through and/or to which to forward a Segment Routing packet encapsulating the native packet. These policies can change in response to network conditions, network programming, etc. In one embodiment, the Segment Routing policy specifies to add one or more SR headers, each with one or more Segment Identifiers, resulting in a Segment Routing packet having one or more Segment Routing headers. In one embodiment, a native packet is received without a Segment Routing header (possibly with an IP Destination Address that is a Segment Identifier/IP address of the receiving Segment Routing node), and the Segment Routing node encapsulates the native packet in a Segment Routing packet including one or more added Segment Routing headers, each including one or more Segment Identifiers. In one embodiment, a Segment Routing packet is received with a Segment Routing header, and with Segment Routing node adding one or more Segment Routing headers resulting in a Segment Routing packet including one or more added Segment Routing headers, each including one or more Segment Identifiers. In contrast, and for each of these scenarios a single Segment Routing header could have been used that includes all of the Segment Identifiers.

FIG. 1B illustrates a process according to one embodiment associated with providing processing and network efficiencies in protecting SRv6 packets and functions using Security Segment Identifiers. Processing begins with process block 160. In process block 162, routers in the networks continuously advertise and exchange routing information including Segment Routing information (e.g., routes including Segment Identifiers of network nodes and their corresponding function or function/arguments, attributes of Segment Identifiers, attributes of node) and other routing information (e.g., IPv4 or IPv6 topology information) typically via one or more routing protocols and /or other protocols. In process block 164, Segment Routing and other network nodes continuously update their Segment Routing policies and routing/forwarding information as required (e.g., based on information received via a routing or other protocol, from a network management system, etc.). Processing of the flow diagram of FIG. 1B is complete as indicated by process block 169.

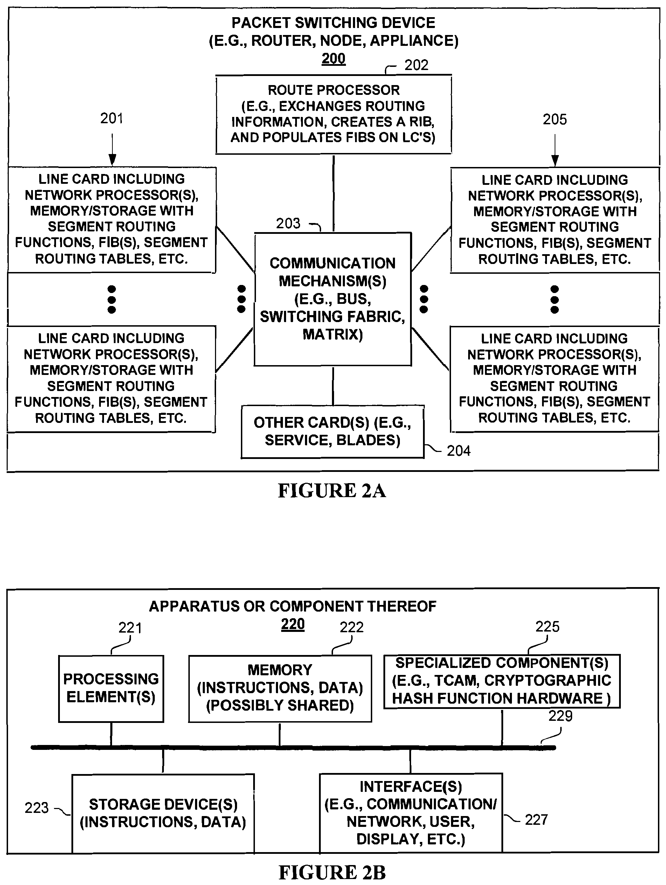

FIGs. 2A-B and their discussion herein provide a description of various network nodes according to one embodiment.

FIG. 2A illustrates one embodiment of a packet switching device 200 (e.g., router, node, appliance, gateway) according to one embodiment. As shown, packet switching device 200 includes multiple line cards 201 and 205, each with one or more network interfaces for sending and receiving packets over communications links (e.g., possibly part of a link aggregation group), and with one or more processing elements that are used in one embodiment associated with providing processing and network efficiencies in protecting SRv6 packets and functions using Security Segment Identifiers. Packet switching device 200 also has a control plane with one or more processing elements (e.g., Route Processor(s)) 202 for managing the control plane and/or control plane processing of packets associated with providing processing and network efficiencies in protecting SRv6 packets and functions using Security Segment Identifiers. Packet switching device 200 also includes other cards 204 (e.g., service cards, blades) which include processing elements that are used in one embodiment to process (e.g., forward/send, drop, manipulate, change, modify, receive, create, duplicate, perform SR functionality possibly with shared memory with one or more service functions, apply a service according to one or more service functions) packets associated with providing processing and network efficiencies in protecting SRv6 packets and functions using Security Segment Identifiers, and some hardware-based communication mechanism 203 (e.g., bus, switching fabric, and/or matrix, etc.) for allowing its different entities 201, 202, 204 and 205 to communicate. Line cards 201 and 205 typically perform the actions of being both an ingress and egress line card, in regards to multiple other particular packets and/or packet streams being received by, or sent from, packet switching device 200. In one embodiment, Segment Routing functions are implemented on line cards 201, 205.

FIG. 2B is a block diagram of an apparatus 220 (e.g., host, router, node, destination, or portion thereof) used in one embodiment associated with providing processing and network efficiencies in protecting SRv6 packets and functions using Security Segment Identifiers. In one embodiment, apparatus 220 performs one or more processes, or portions thereof, corresponding to one of the flow diagrams illustrated or otherwise described herein, and/or illustrated in another diagram or otherwise described herein.

In one embodiment, apparatus 220 includes one or more processor(s) 221 (typically with on-chip memory), memory 222 (possibly shared memory), storage device(s) 223, specialized component(s) 225 (e.g. optimized hardware such as for performing lookup, packet processing (including Segment Routing processing) and/or service function operations; associative memory; binary and/or ternary content-addressable memory; Application Specific Integrated Circuit(s), cryptographic hash hardware, etc.), and interface(s) 227 for communicating information (e.g., sending and receiving packets, user-interfaces, displaying information, etc.), which are typically communicatively coupled via one or more communications mechanisms 229 (e.g., bus, links, switching fabric, matrix), with the communications paths typically tailored to meet the needs of a particular application.

Various embodiments of apparatus 220 may include more or fewer elements. The operation of apparatus 220 is typically controlled by processor(s) 221 using memory 222 and storage device(s) 223 to perform one or more tasks or processes. Memory 222 is one type of computer-readable/computer-storage medium, and typically comprises random access memory (RAM), read only memory (ROM), flash memory, integrated circuits, and/or other memory components. Memory 222 typically stores computer-executable instructions to be executed by processor(s) 221 and/or data which is manipulated by processor(s) 221 for implementing functionality in accordance with an embodiment. Storage device(s) 223 are another type of computer-readable medium, and typically comprise solid state storage media, disk drives, diskettes, networked services, tape drives, and other storage devices. Storage device(s) 223 typically store computer-executable instructions to be executed by processor(s) 221 and/or data which is manipulated by processor(s) 221 for implementing functionality in accordance with an embodiment.

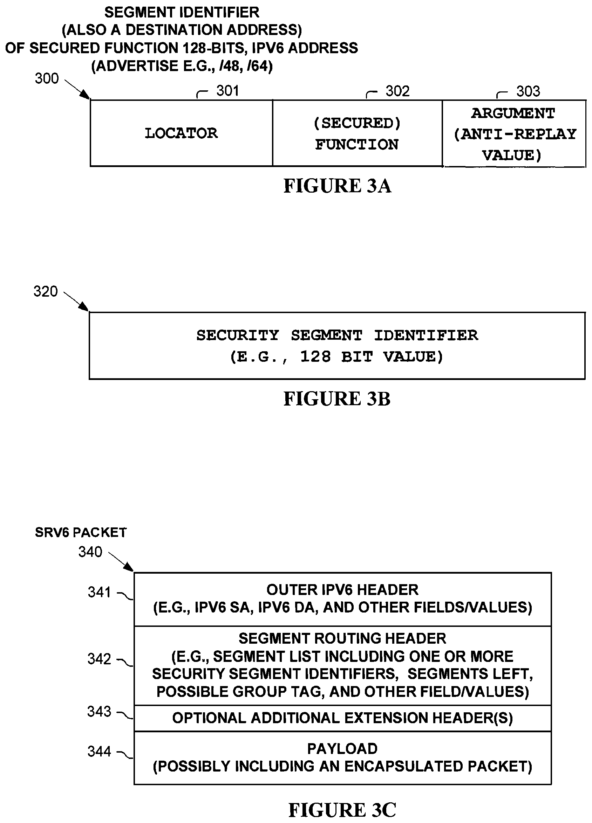

FIG. 3A illustrates a Segment Identifier 300 according to one embodiment. As shown, Segment Identifier 300 includes locator 301 that is typically unique to a node; function 302 that identifies a Segment Routing function (e.g., a secured or non-secured function); and argument 303 (e.g., an anti-replay value or parameter for the function). The /48, /64, /96 or other portion of Segment Identifier 300 is advertised as an address of a network node, with Segment Identifier 300 also being used as the Destination Address of a Segment Routing packet to steer the packet to that node. In one embodiment, the advertisement of Segment Identifier 300 excludes the argument 303 portion, as it varies typically on a per-sequential packet basis, such as for, but not limited to, providing an anti-replay value (e.g., sequence number) for use by the receiving Segment Routing node.

FIG. 3B illustrates a Security Segment Identifier 320 according to one embodiment wherein it is a value (e.g., 128 bits) that can fit in one or more Segment Identifiers in a Segment List of a Segment Routing packet.

FIG. 3C illustrates a SRv6 packet 340 according to one embodiment. As shown, SRv6 packet 340 includes an outer IPv6 header 341 that includes a Source Address and a Destination Address (and other values), Segment Routing header 342 (e.g., that includes a Segment List with one or more Security Segment Identifiers and/or other Segment Identifiers, a Segments Left value, group tag and other fields/values); optional additional extension headers 343 (that may include another Segment Routing header); and payload 344 (possibly including an encapsulated original packet).

One embodiment improves processing and network efficiencies by using the Segment List of a Segment Routing Header to store Security Segment Identifiers, *albeit* in violation of standardized Segment Routing requirements. The Security Segment Identifier is included not for being an address of a network node (e.g., and identifying a Segment Routing function), but rather is a security authentication value formulated based on portions of the Segment Routing packet (e.g., Destination Address and/or Segment Identifier including the anti-replay value) and typically other values (e.g., a pre-shared key).

In one embodiment, one or more Security Segment Identifiers are used to authenticate a packet, as well as protect a Segment Routing function from being invoked for a non-authenticated packet. In one embodiment, one or more Security Segment Identifiers are used to only protect a single Segment Routing function and therefore only that corresponding network node performs the authentication, and not all Segment Routing nodes that the Segment Routing packet may traverse. Also in one embodiment, one or more Security Segment Identifiers are used in authentication of the packet including the Source Address and/or Destination Address which may vary as the packet traverses the network. Typically, the creator of the Security Segment Identifier(s) that protect these values does so with their values when received by the second Segment Routing node, and not when sent from the originating Segment Routing node.

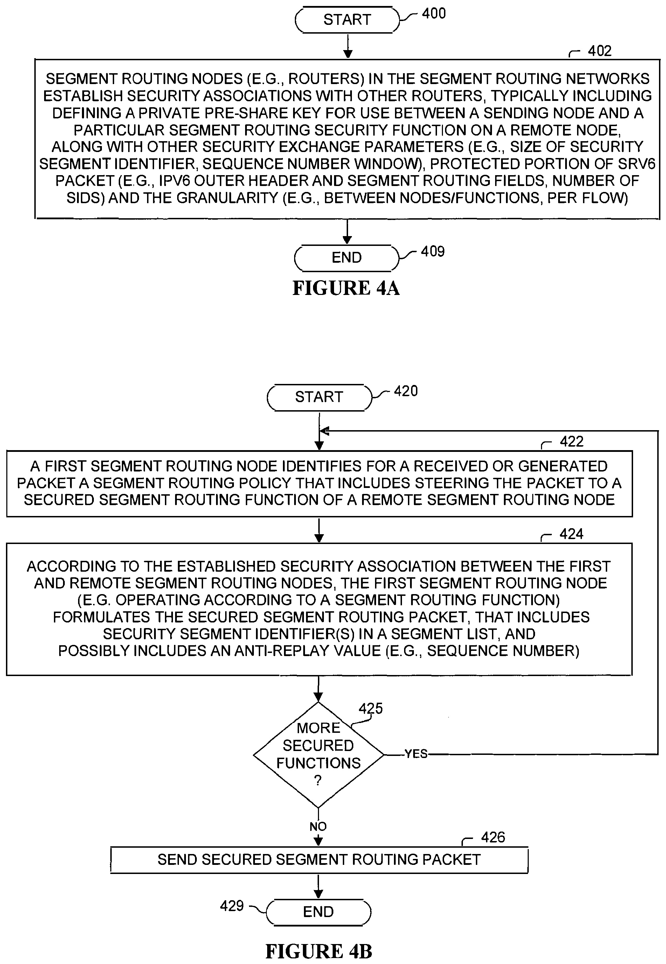

FIG. 4A illustrates a process according to one embodiment. Processing begins with process block 400. In process block 402, segment routing nodes (e.g., routers) in the segment routing networks establish security associations with other routers in order to send secured Segment Routing packets. In one embodiment, a security association is between two Segment Routing nodes, thus, each network node does not require the same pre-shared key. In one embodiment, a security association is a one-to-many or many-to-many relationship among Segment Routing nodes.

In one embodiment, these security associations are exchanged using a routing or other protocol, using a network management or operating system or path computation engine, or via another manner. This security association typically includes defining a private pre-share key for use between a sending node and a particular segment routing security function on a remote node, as well as other security parameters such as, but not limited to the size of a Security Segment Identifier (e.g., number of Segment Identifiers in the Segment List); whether to provide anti-replay protection, and if so, possibly a range for sequence numbers; what fields/values from the packet are included in the protected portion (e.g., Source Address, Destination Address, Segments Left, group tag, Segment Identifiers protected); other values (e.g., whether to use an extended sequence number); and the granularity of the security association (e.g., used for all packets between the two nodes, only for a particular flow). These security associations are updated (e.g., added, removed, modified) as needed. Processing of the flow diagram of FIG. 4A is complete as indicated by process block 409.

FIG. 4B illustrates a process according to one embodiment. Processing begins with process block 420. In process block 422 for a received or generated packet, a first segment routing node identifies a Segment Routing policy that includes steering the packet to a secured Segment Routing function of a remote segment routing node according to an established security association between the first and remote Segment Routing nodes. Processing continues to process block 424.

In one embodiment, the security association defines how the one or more Security Segment Identifiers will be formulated, including what cryptographic hashing (e.g. Secure Hash Algorithm 2 / SHA-2) or other authentication function will be used, the values on which be used in formulating the Security Segment Identifier(s). In one embodiment, these values include, but are not limited to:
- IPv6 Source Address,
- IPv6 Destination Address,
- Segment Routing Header tag,
- current Segment Identifier (typically the same value as the Destination Address),
- one or more Segments (e.g., Segment Identifier(s)) in a Segment List,
- Segments Left value,
- Segment Routing Header Group Tag,
- Next Header Field,
- an extended (e.g., 64-bit) sequence number not communicated in the packet but part of the security association,
- pre-shared key, and/or
- other values extracted from the packet or acquired elsewhere.

In one embodiment, a 256-bit value is formulated that is communicated in two Security Segment Identifiers in a Segment List of a packet. One embodiment formulates a single Security Segment Identifier by extracting 128 or fewer bits from a cryptographic hashing result (e.g., a 256-bit value generated by SHA-2).

In one embodiment, the security association designates to include an anti-replay value (e.g., a sequence number from a sliding window) in the Destination Address and/or the current Segment Identifier in the Segments List of the receiving Segment Routing node. In one embodiment, each of the sending and receiving Segment Routing nodes maintains an extended sixty-four bit sequence number, but only communicates the low-order thirty-two bits of an extended sixty-four bit sequence number in the argument/low-order bits of the Destination Address and/or current Segment Identifier. To provide protection of this anti-replay value, it is typically included in the formulation of the Security Segment Identifier(s), such as, but not limited to, directly or as a portion of the Destination Address and/or current Segment Identifier.

The security Segment Identifier is added to a Segment List of the packet along with updating other fields of the Segment Routing Packet.

As determined in process block 425, if there are additional secured functions to be traversed by the packet, then processing returns to process block 422 to process accordingly; otherwise processing proceeds to process block 426. For example, a segment routing policy may steer a packet through two or more secure Segment Routing functions, each protected by a different one or more Security Segment Identifiers (even with a first of the Security Segment Identifier(s) formulated based on a second of the Security Segment Identifier(s), and possibly formulated based on different Source and Destination Addresses, different Segments Left values, an added Segment Routing Policy by an intervening Segment Routing node, etc. One embodiment generates correct Security Segment Identifiers for these and other scenarios.

Continuing with process block 426, the secured Segment Routing packet is sent into the network, and processing of the flow diagram of FIG. 4B is complete as indicated by process block 429.

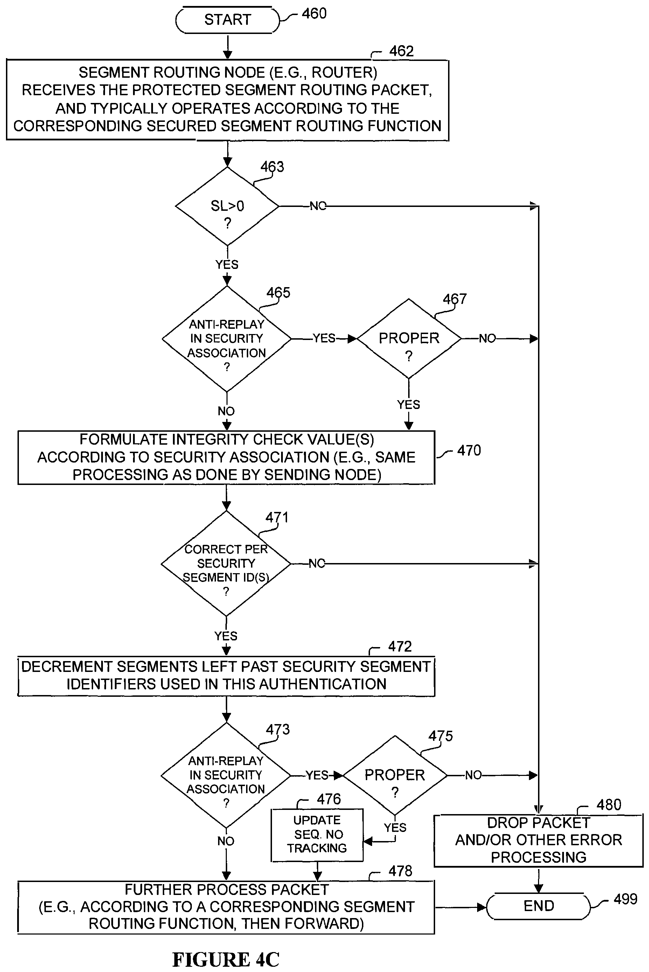

FIG. 4C illustrates a process according to one embodiment. Processing begins with process block 460. In process block 462, a Segment Routing node (e.g., router) receives the protected Segment Routing packet, and operates according to secured Segment Routing function identified by the Destination Address (and typically by the current Segment Identifier in a Segment List).

As determined in process block 463, if Segments Left is zero (then the Security Segment Identifier is not present), then processing proceeds to process block 480; otherwise processing continues to process block 465.

As determined in process block 465, if anti-replay is to be invoked per the corresponding Security Association, then processing proceeds to process block 467; otherwise, processing proceeds directly to process block 470.

As determined in process block 467, if the sequence number (e.g., in the low-order bits / argument of the current Segment Identifier or the Destination address) is proper for the packet (e.g., within a current sliding window or other expected value), then processing proceeds to process block 470; otherwise processing proceeds to process block 480.

Continuing in process block 470, the node formulates one or more integrity check values according to the Security Association (e.g., typically the same processing performed by the originating node in process block 424 of FIG. 4B). As determined in process block 471, if the integrity check value(s) are correct per the Security Segment Identifier(s) in the Segment List of the received packet, then processing proceeds to process block 472; otherwise processing proceeds to process block 480. Typically, these two formulated values will be the same, but in one embodiment, some additional manipulation is performed.

Continuing with process block 472, the Segments Left value is decremented past the corresponding one or more Security Identifiers. Then as determined in process block 473, if anti-replay is to be invoked per the corresponding Security Association, then processing proceeds to process block 475; otherwise, processing proceeds directly to process block 478. One embodiment performs this anti-replay check twice, *inter alia,* to ensure that multiple packets with a same sequence number are not processed overlapping in time.

Continuing with process block 475, if the sequence number (e.g., in the low-order bits / argument of the current Segment Identifier or the Destination address) is proper for the packet (e.g., within a current sliding window or other expected value), then processing proceeds to process block 476; otherwise processing proceeds to process block 480. In process block 476, the local sequence number tracking for the Security Association is updated to reflect that the sequence number was used (so another packet cannot use it, at least until a possible wrap-around of sequence numbers). Processing continues with process block 478.

Continuing with process block 478, the packet has been authenticated (e.g., origin authenticated, integrity of the segments protected, anti-replay protection) in a manner to allow further processing of the packet, typically by another Segment Routing function that was protected from execution unless the packet was authenticated. Processing proceeds to process block 499.

Continuing with process block 480, the packet is dropped as it was not authenticated and/or other error processing is performed. Processing proceeds to process block 499.

Processing of the flow diagram of FIG. 4C is completed as indicated by process block 499.

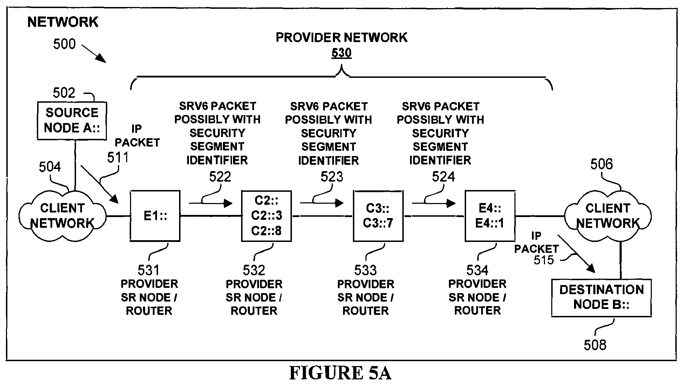

FIG. 5A illustrates a network 500 operating according to one embodiment.

Network 500 includes client network 504 (with source node 502 having an IPv6 address of A::) and client network 506 (with destination node 508 having an IPv6 address of B::).

Network 500 also includes provider network 530, that includes provider nodes 531-534 (e.g., Segment Routing routers):
- SR Router 531 has an IPv6 address of E1::,
- SR Router 532 has IP Addresses of C2::, C2::3, and C2::8;
- SR Router 533 has IPv6 addresses of C3::, and C3::7, and
- SR Router 534 has IPv6 addresses of E4:: and E4::1.
Each Router 531-536 typically advertises all of their IP addresses using a routing or other protocol. Note, each of IPv6 addresses C2::3, C2::8; C3::7, and E4::1 include a specification of a secured Segment Routing function that in one embodiment, operates according to the flow diagram of FIG. 4C.

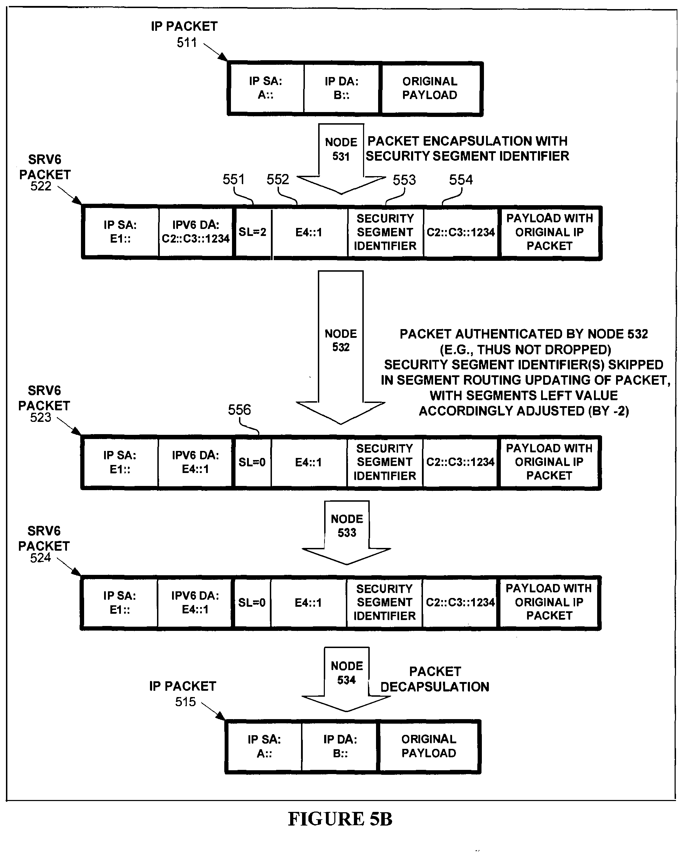

FIG. 5A also shows the progression through network 500 of a same IP packet (denoted 511, 522, 523, 524, and 515 for ease of communicating its current position in network 500). Each of FIGs. 5B-F illustrated different scenarios associated with this IP packet (511, 522, 523, 524, 515) traversing network 500 according to one embodiment that provides processing and network efficiencies in protecting Internet Protocol version 6 (IPv6) Segment Routing (SRv6) packets and functions using Security Segment Identifiers.

Each of FIGs. 5B-F illustrate, according to one embodiment, processing of a packet as it is steered through network 500 as illustrated in FIG. 5A. These embodiments are illustrative of only some of an unlimited number of different processing that is performed by one or more Segment Routing nodes in accordance with one embodiment. In one embodiment, this processing includes that described in relation to FIG. 4B and/or FIG. 4C.

FIG. 5B illustrates an IP packet 511 being encapsulated and forwarded through network 500 according to a secure Segment Routing policy of one embodiment, with a Security Association having been established between Segment Routing nodes 531 and 532 for being authenticated by a secured Segment Routing function identified by C2::C3, with anti-replay protection enabled, and using a single Security Segment Identifier.

Network node 531 receives packet 511 and generates secure Segment Routing packet 522 which includes original packet 511 encapsulated therein. Segment Routing packet 522 has a Source Address of node 531, a Destination Address (same value as Segment Identifier 554) of a secured Segment Routing function of node 531. Segment Routing Header includes the three Segment Identifiers 552-554, Segments Left 551 having a value of two as Segment Identifier 554 is the current Segment Identifier (and the same as the Destination Address of packet 522). Note, the argument portion of Segment Identifier 554 (and low-order bits of the Destination Address) includes an anti-replay sequence number value of 1234. Node 531 formulates security Segment Identifier 553 according to the established Security Association. In one embodiment, a one-way cryptographic hash function is performed on at least the secured portion of packet 522 in formulating the value of Security Segment Identifier 553, typically using a pre-shared key that is part of the security association. Security Segment Identifier 553 is inserted in a Segment List of a Segment Routing Header of packet 522. In one embodiment, the secured portion includes the Destination Address of packet 522 and/or the current Segment Identifier 554 (that includes at least a portion of the anti-replay value so that it is secured). In one embodiment, the secured portion includes the Source Address of packet 522, the Destination Address of packet 522, the current Segment Identifier 554, Segments Left 551, Segment Identifier 552, and/or other values (e.g., from packet 552, part of the security association such as, but not limited to, an extended sequence number), and/or otherwise described herein. Node 531 sends packet 522, including Security Segment Identifier 553, into network 500.

Network node 532 receives packet 522, which has a Destination Address that is an address of node 532. Security authentication processing is performed according to the secured Segment Routing function identified by C2::C3 and according to the corresponding security association. In one embodiment, this authentication processing includes verifying that the sequence number is correct (and only used once) such as using a sliding window technique, and typically repeating the processing performed by node 531 by using the same one-way cryptographic hash function processing on the same values from packet 522 and that are part of the security association (e.g., the pre-shared key) to generated an integrity check value. The packet is authenticated based on the integrity check value and Security Segment Identifiers 553, such as by, but not limited to a direct comparison, or possibly after some manipulation of one or both of these values (e.g., multiply each by two and compare those values). In response to authentication, packet 522 is further processed (e.g., not dropped) such as, but not limited to, according to another Segment Routing function invoked by the secured Segment Routing function identified by C2::C3.

Segments Left 551 of packet 522 is updated (to zero), as reflected in Segments Left 556 of packet 523, by being reduced by two to advance past both current Segment Identifier 554 and Security Segment Identifier 553 of packet 522, with the Destination Address of packet 523 being set to the Segment Identifier in the Segment List identified by the value of Segments Left 556 (i.e., value of zero). Packet 523 is sent from node 532.

Node 533 of network 500 receives packet 523, which is not addressed to node 533, thus is forwarded back into network 500 as denoted packet 524.

In response to receiving packet 524, node 534 operates according to the Segment Routing function identified by E4::1 to decapsulate and send IP packet 515 to client network 506. In one embodiment, even though received packet 524 includes the Security Segment Identifier, node 534 does not perform authentication processing based thereon; rather, node 534 simply ignores the Security Segment Identifier.

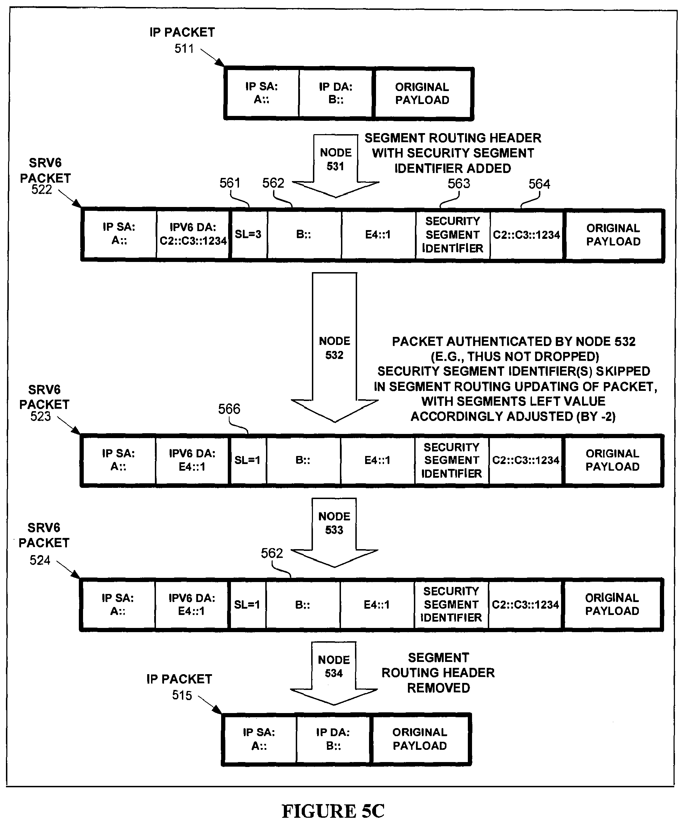

FIG. 5C illustrates an IPv6 packet 511 being modified to add a Segment Routing Header and forwarded through network 500 according to a secure Segment Routing policy of one embodiment, with a Security Association having been established between Segment Routing nodes 531 and 532 for being authenticated by a secured Segment Routing function identified by C2::C3, with anti-replay protection enabled, and using a single Security Segment Identifier.

This network processing is very similar to that described in relation to FIG. 5B (or otherwise described herein), so the full description will not be repeated. FIG. 5B illustrates packet encapsulation with the use of a Security Segment identifier, while FIG. 5C illustrates adding a Segment Routing Header with the use of a Security Segment identifier.

Network node 531 receives packet 511 and generates secure Segment Routing packet 522 which includes original packet 511 with a Segment Routing Header added thereto. The Segment List includes a fourth Segment Identifier 562, which is the Destination Address of received packet 511, with Segments Left 561 set to three. The Destination Address of packet 522 is set to the first Segment Identifier 564. Note, the argument portion of Segment Identifier 564 (and low-order bits of the Destination Address) includes an anti-replay sequence number value of 1234. Node 531 formulates security Segment Identifier 563 according to the established Security Association. In one embodiment, the protected portion also includes Segment Identifier 562. Node 531 sends packet 522, including Security Segment Identifier 563, into network 500.

Network node 532 receives packet 522, which has a Destination Address that is an address of node 532. Security authentication processing is performed according to the secured Segment Routing function identified by C2::C3 and according to the corresponding security association. In response to authentication, packet 522 is further processed (e.g., not dropped) such as, but not limited to, according to another Segment Routing function invoked by the secured Segment Routing function identified by C2::C3.

Segments Left 561 of packet 522 is updated (to one), as reflected as Segments Left 566 of packet 523, by being reduced by two to advance past both current Segment Identifier 564 and Security Segment Identifier 563 of packet 522, with the Destination Address of packet 523 being set to the Segment Identifier in the Segment List identified by the value of Segments Left 566 (i.e., value of one). Packet 523 is sent from node 532.

Node 533 of network 500 receives packet 523, which is not addressed to node 533, thus is forwarded back into network 500 as denoted packet 524.

In response to receiving packet 524, node 534 operates according to the Segment Routing function identified by E4::1 to decapsulate and send IP packet 515 to client network 506 (with a Destination Address of Segment Identifier 562 of received packet 524). In one embodiment, even though received packet 524 includes the Security Segment Identifier, node 534 does not perform authentication processing based thereon; rather, node 534 simply ignores the Security Segment Identifier.

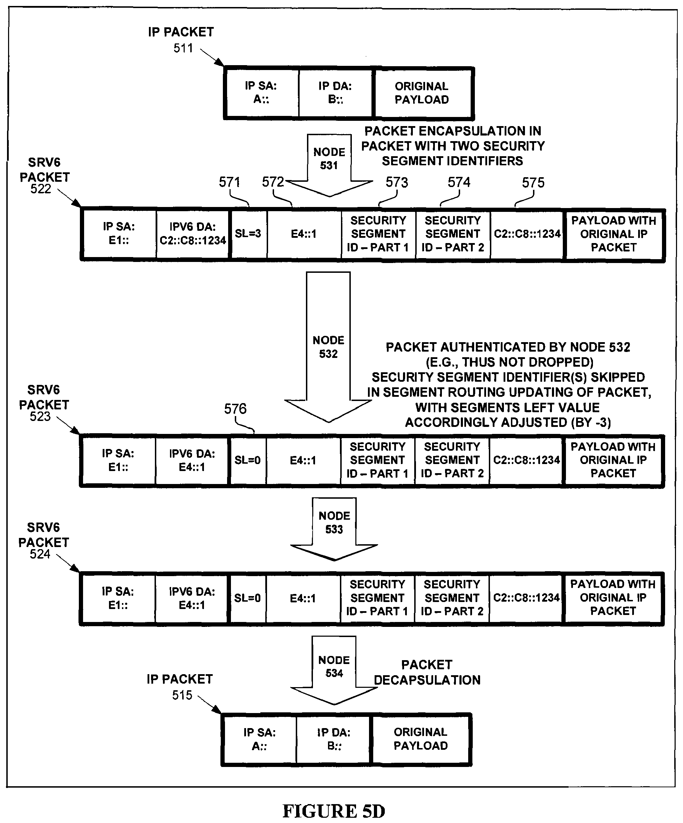

FIG. 5D illustrates an IP packet 511 being encapsulated and forwarded through network 500 according to a secure Segment Routing policy of one embodiment, with a Security Association having been established between Segment Routing nodes 531 and 532 for being authenticated by a secured Segment Routing function identified by C2::C8, with anti-replay protection enabled, and using a two Security Segment Identifiers (e.g., an integrity check value of up to 256 bits).

This network processing is very similar to that described in relation to FIG. 5B that uses an integrity check value contained in only one, not two, Security Segment Identifiers (or otherwise described herein), so the full description will not be repeated.

Network node 531 receives packet 511 and generates secure Segment Routing packet 522 which includes original packet 511 encapsulated therein. Segment Routing packet 522 has a Source Address of node 531, a Destination Address (same value as Segment Identifier 575) of a secured Segment Routing function of node 531. Segment Routing Header includes the four Segment Identifiers 572-575, Segments Left 571 having a value of three as Segment Identifier 575 is the current Segment Identifier (and the same as the Destination Address of packet 522). Note, the argument portion of Segment Identifier 575 (and low-order bits of the Destination Address) includes an anti-replay sequence number value of 1234. Node 531 formulates security Segment Identifiers 573-574 according to the established Security Association. Node 531 sends packet 522, including Security Segment Identifiers 573-574, into network 500.

Network node 532 receives packet 522, which has a Destination Address that is an address of node 532. Security authentication processing is performed according to the secured Segment Routing function identified by C2::C8 and according to the corresponding security association. In response to authentication, packet 522 is further processed (e.g., not dropped) such as, but not limited to, according to another Segment Routing function invoked by the secured Segment Routing function identified by C2::C8.

Segments Left 571 of packet 522 is updated (to zero), as reflected as Segments Left 576 of packet 523, by being reduced by three to advance past current Segment Identifier 575 and the two Security Segment Identifiers 573 and 574 of packet 522, with the Destination Address of packet 523 being set to the Segment Identifier in the Segment List identified by the value of Segments Left 576 (i.e., value of zero). Packet 523 is sent from node 532.

Node 533 of network 500 receives packet 523, which is not addressed to node 533, thus is forwarded back into network 500 as denoted packet 524.

In response to receiving packet 524, node 534 operates according to the Segment Routing function identified by E4::1 to decapsulate and send IP packet 515 to client network 506. In one embodiment, even though received packet 524 includes the Security Segment Identifier, node 534 does not perform authentication processing based thereon; rather, node 534 simply ignores the Security Segment Identifier.

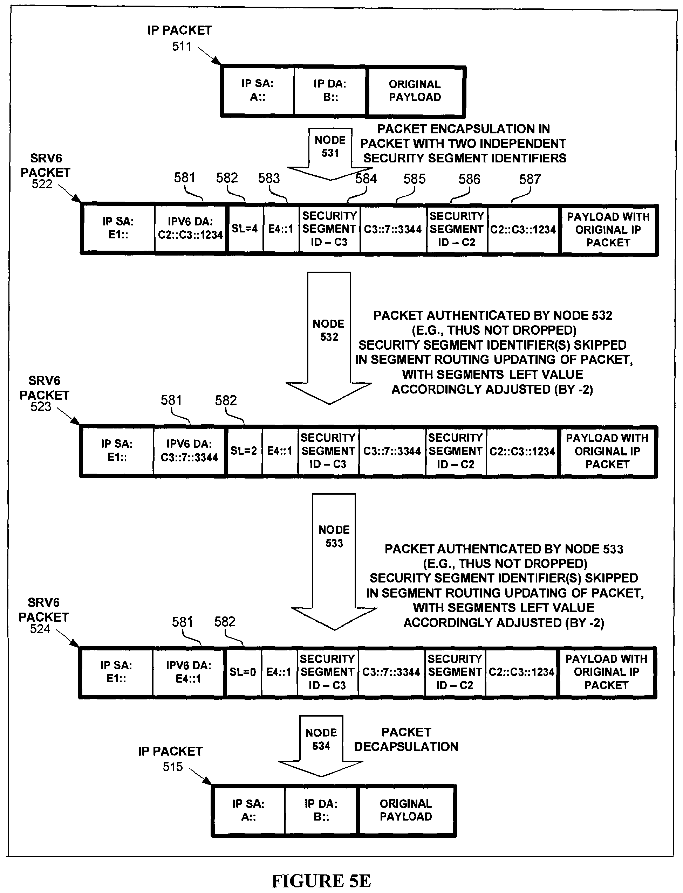

FIG. 5E illustrates an IP packet 511 being encapsulated and forwarded through network 500 according to a secure Segment Routing policy of one embodiment, with
- a first Security Association having been established between Segment Routing nodes 531 and 532 for being authenticated by a secured Segment Routing function identified by C2::C3, with anti-replay protection enabled; and
- a second Security Association having been established between Segment Routing nodes 531 and 533 for being authenticated by a secured Segment Routing function identified by C3::C7, with anti-replay protection enabled; and

This network processing is very similar to that described in relation to FIG. 5B that uses a secured Segment routing function on one, not two nodes (or otherwise described herein), so the full description will not be repeated.

Network node 531 receives packet 511 and generates secure Segment Routing packet 522 which includes original packet 511 encapsulated therein. Segment Routing packet 522 has a Source Address of node 531, a Destination Address 581 (same value as Segment Identifier 587) of a secured Segment Routing function of node 531. Segment Routing Header includes the five Segment Identifiers 583-587, Segments Left 582 having a value of four as Segment Identifier 587 is the current Segment Identifier (and the same as the Destination Address of packet 522). Note, the argument portion of Segment Identifier 587 (and low-order bits of the Destination Address 581) includes an anti-replay sequence number value of 1234; while the argument portion of Segment Identifier 585 include an anti-replay sequence number value of 3344.

Node 531 formulates security Segment Identifiers 586 and 584 according to the their respective established Security Association. In one embodiment, a secured portion for the calculation of either security Segment Identifiers 584 or 586 includes the value of the other security Segment Identifiers 587 or 584.

In one embodiment, the secured portion of packet 523 includes its Destination Address 581, which is a different value than Destination Address 581 of packet 522 sent from node 531. Therefore, node 531, in formulating the value of Security Segment Identifier 584, uses the Destination Address 581 of packet 523 that will be received by node 533. Similarly, in one embodiment, the secured portion of packet 523 includes Segments Left 583. Therefore, node 531, in formulating the value of Security Segment Identifier 584, uses the value (two) of Segments Left 583 of packet 523.

Node 531 sends packet 522, including Security Segment Identifiers 586 and 584, into network 500.

Network node 532 receives packet 522, which has a Destination Address that is an address of node 532. Security authentication processing is performed according to the secured Segment Routing function identified by C2::C3 and according to the corresponding security association. In response to authentication, packet 522 is further processed (e.g., not dropped) such as, but not limited to, according to another Segment Routing function invoked by the secured Segment Routing function identified by C2::C3.

Segments Left 582 of packet 523 is updated (to two) by being reduced by two to advance past current Segment Identifier 587 and first Security Segment Identifier 586, with Destination Address 581 of packet 523 being set to the Segment Identifier in the Segment List identified by the value of Segments Left 582 (i.e., value of two). Packet 523 is sent from node 532.

Network node 533 receives packet 523, which has a Destination Address that is an address of node 533. Security authentication processing is performed according to the secured Segment Routing function identified by C3::C7 and according to the corresponding security association. In response to authentication, packet 523 is further processed (e.g., not dropped) such as, but not limited to, according to another Segment Routing function invoked by the secured Segment Routing function identified by C3::C7.

Segments Left 582 of packet 524 is updated (to zero) by being reduced by two to advance past current Segment Identifier 585 and second Security Segment Identifier 584, with Destination Address 581 of packet 524 being set to the Segment Identifier in the Segment List identified by the value of Segments Left 582 (i.e., value of zero). Packet 524 is sent from node 533.

In response to receiving packet 524, node 534 operates according to the Segment Routing function identified by E4::1 to decapsulate and send IP packet 515 to client network 506. In one embodiment, even though received packet 524 includes the two Security Segment Identifiers, node 534 does not perform authentication processing based thereon; rather, node 534 simply ignores the Security Segment Identifiers.

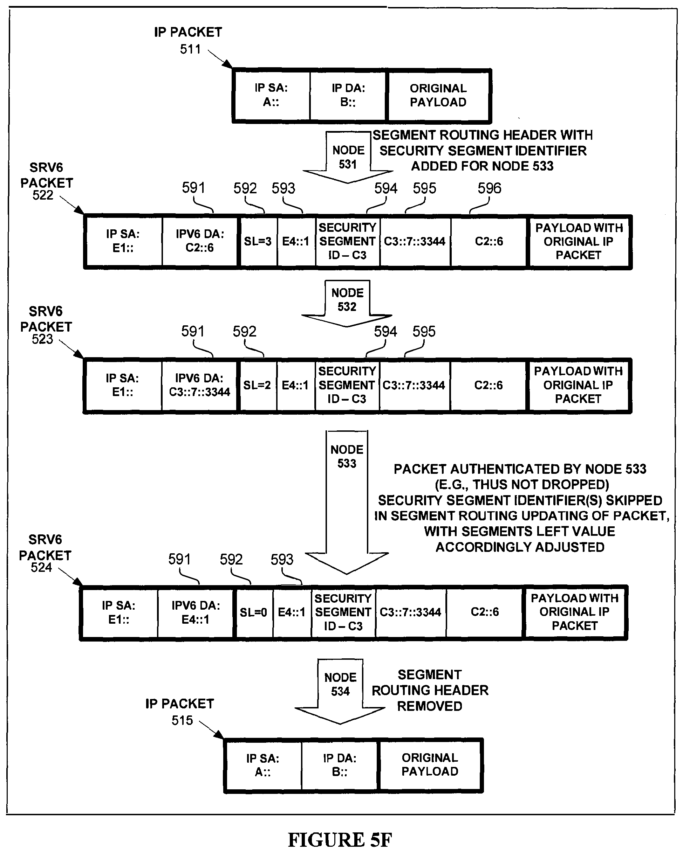

FIG. 5F illustrates an IP packet 511 being encapsulated and forwarded through network 500 according to a secure Segment Routing policy of one embodiment, with a Security Association having been established between Segment Routing nodes 531 and 533 (i.e., not directly connected Segment Routing node 532) for being authenticated by a secured Segment Routing function identified by C3:7, with anti-replay protection enabled, and using a single Security Segment Identifier.

This network processing is very similar to that described in relation to FIG. 5B and 5E (or otherwise described herein), so the full description will not be repeated.

Network node 531 receives packet 511 and generates secure Segment Routing packet 522 which includes original packet 511 encapsulated therein. Segment Routing packet 522 has a Source Address of node 531, a Destination Address 591 (same value as Segment Identifier 596) of a non-secured Segment Routing function of node 531. The Segment List of packet 522 includes four Segment Identifiers 593-596, including Security Segment Identifier 594. Segments Left 592 is set to three. The argument portion of Segment Identifier 595 includes an anti-replay sequence number value of 3344.

Node 531 formulates security Segment Identifier 594 according to the established Security Association. In one embodiment, the secured portion of packet 523 includes its Destination Address 591 and Segments Left 592, which are different values in packet 522 sent from node 531 and packet 523 received by node 533. Therefore, node 531, in formulating the value of Security Segment Identifier 594, uses the Destination Address 591 and Segments Left 592 of packet 523, not of packet 522.

Node 531 sends packet 522, including Security Segment Identifier 594, into network 500.

Network node 532 receives packet 522, which has a Destination Address that is an address of node 532, which performs Segment Routing processing (including reducing Segments Left 592 by one and updating Destination Address 591). Resulting packet 523 is sent into network 500.

Network node 533 receives packet 523, which has a Destination Address that is an address of node 533. Security authentication processing is performed according to the secured Segment Routing function identified by C3::C7 and according to the corresponding security association. In response to authentication, packet 523 is further processed (e.g., not dropped) such as, but not limited to, according to another Segment Routing function invoked by the secured Segment Routing function identified by C3::C7.

Segments Left 592 of packet 524 is updated (to zero) by being reduced by two to advance past current Segment Identifier 595 and second Security Segment Identifier 594, with Destination Address 591 of packet 524 being set to the Segment Identifier in the Segment List identified by the value of Segments Left 592 (i.e., value of zero). Packet 524 is sent from node 533.

In response to receiving packet 524, node 534 operates according to the Segment Routing function identified by E4::1 to decapsulate and send IP packet 515 to client network 506. In one embodiment, even though received packet 524 includes the Security Segment Identifier 595, node 534 does not perform authentication processing based thereon; rather, node 534 simply ignores Security Segment Identifier 595.

In summary, in one embodiment, a Segment Routing network node provides processing and network efficiencies in protecting Internet Protocol version 6 (IPv6) Segment Routing (SRv6) packets and functions using Security Segment Identifiers, which are included in Segment Lists of a Segment Routing Header of a SRv6 packet. The Security Segment Identifier provides, inter alia, origin authentication, integrity of information in one or more headers of the packet, and/or anti-replay protection. In one embodiment, a Security Segment Identifier includes a value determined based on a secured portion of the packet. A typically secured portion includes the Source and Destination Addresses, one or more Segment Identifiers in a Segment List and the Segments Left value. In one embodiment, the Destination Address and/or a Segment Identifier in the Segment List includes and an anti-replay value (e.g., sequence number or portion thereof) which is also in the secured portion of the packet.

In view of the many possible embodiments to which the principles of the disclosure may be applied, it will be appreciated that the embodiments and aspects thereof described herein with respect to the drawings/figures are only illustrative and should not be taken as limiting the scope of the disclosure. For example, and as would be apparent to one skilled in the art, many of the process block operations can be re-ordered to be performed before, after, or substantially concurrent with other operations. Also, many different forms of data structures could be used in various embodiments. The disclosure as described herein contemplates all such embodiments as may come within the scope of the following claims.

## Claims

1. A method, comprising:
receiving (462), by a particular Segment Routing node via a network, a protected Segment Routing packet that includes a Source Address and Destination Address in an outer Internet Protocol version 6 header, and a Segment Routing Header comprising a Segment List including one or more Security Segment Identifiers;
generating (470) an integrity check value for the protected Segment Routing packet said received by the particular Segment Routing node, with said generating the integrity check value including applying a one-way cryptographic hash function to a pre-shared key and a plurality of protected values of the protected Segment Routing packet, with the plurality of protected values including the Source Address and the Destination Address; and
in response to the integrity of the protected Segment Routing packet being verified by the integrity check value being correct for said one or more Security Segment Identifiers, the particular Segment Routing node further processing (478) the protected Segment Routing packet.

2. The method of claim 1,
comprising deriving a sequence number based on the value of the Destination Address or a specific Segment Identifier in the Segment List of the protected Segment Routing packet received by the particular Segment Routing node; and wherein said integrity of the protected Segment Routing packet being verified includes determining that the sequence number is an expected value for the protected Segment Routing packet received by the particular Segment Routing node.

3. A computer program comprising instructions which, when executed by a computer, cause the computer to carry out the steps of the method of claim 1 or 2.

4. An apparatus for a particular Segment Routing node, the apparatus comprising:
means for receiving, by the particular Segment Routing node via a network, a protected Segment Routing packet that includes a Source Address and Destination Address in an outer Internet Protocol version 6 header, and a Segment Routing Header comprising a Segment List including one or more Security Segment Identifiers;
means for generating an integrity check value for the protected Segment Routing packet said received by the particular Segment Routing node, with said generating the integrity check value including applying a one-way cryptographic hash function to a preshared key and a plurality of protected values of the protected Segment Routing packet, with the plurality of protected values including the Source Address and the Destination Address; and
the apparatus further comprising means for processing the protected Segment Routing packet, in response to the integrity of the protected Segment Routing packet being verified by the integrity check value being correct for said one or more Security Segment Identifiers.

5. The apparatus of claim 4 further comprising:
means for deriving a sequence number based on the value of the Destination Address or a specific Segment Identifier in the Segment List of the protected Segment Routing packet received by the particular Segment Routing node; and wherein said integrity of the protected Segment Routing packet being verified includes determining that the sequence number is an expected value for the protected Segment Routing packet received by the particular Segment Routing node.

## Patentansprüche

1. Verfahren, das Folgendes umfasst:
Empfangen (462), durch einen bestimmten Segment-Routing-Knoten über ein Netzwerk, eines geschützten Segment-Routing-Pakets, das eine Quelladresse und eine Zieladresse in einem äußeren Internet-Protocol-Version-6-Header und einen Segment-Routing-Header einschließt, der eine Segmentliste umfasst, einschließlich einer oder mehrerer Sicherheitssegmentkennungen;
Erzeugen (470) eines Integritätsprüfwerts für das geschützte Segment-Routing-Paket, das von dem bestimmten Segment-Routing-Knoten wie genannt empfangen wird, wobei das genannte Erzeugen des Integritätsprüfwerts ein Anwenden einer kryptografischen Einweg-Hashfunktion auf einen vorher geteilten Schlüssel und eine Vielzahl von geschützten Werten des geschützten Segment-Routing-Pakets einschließt, wobei die Vielzahl von geschützten Werten die Quelladresse und die Zieladresse einschließt; und
als Reaktion auf ein Verifizieren der Integrität des geschützten Segment-Routing-Pakets dadurch, dass der Integritätsprüfwert für die genannte eine oder die genannten mehreren Sicherheitssegmentkennungen korrekt ist, weiteres Verarbeiten (478) des geschützten Segment-Routing-Pakets durch den bestimmten Segment-Routing-Knoten.

2. Verfahren nach Anspruch 1,
umfassend ein Ableiten einer Sequenznummer auf der Basis des Werts der Zieladresse oder einer spezifischen Segmentkennung in der Segmentliste des geschützten Segment-Routing-Pakets, das von dem bestimmten Segment-Routing-Knoten empfangen wird; und wobei das genannte Verifizieren der Integrität des geschützten Segment-Routing-Pakets ein Bestimmen einschließt, dass die Sequenznummer ein erwarteter Wert für das geschützte Segment-Routing-Paket ist, das von dem bestimmten Segment-Routing-Knoten empfangen wird.

3. Computerprogramm, das Befehle umfasst, die bei Ausführung durch einen Computer den Computer zum Ausführen der Schritte des Verfahrens nach Anspruch 1 oder 2 veranlassen.

4. Vorrichtung für einen bestimmten Segment-Routing-Knoten, wobei die Vorrichtung Folgendes umfasst:
Mittel zum Empfangen, durch den bestimmten Segment-Routing-Knoten über ein Netzwerk, eines geschützten Segment-Routing-Pakets, das eine Quelladresse und eine Zieladresse in einem äußeren Internet-Protocol-Version-6-Header und einen Segment-Routing-Header einschließt, der eine Segmentliste umfasst, einschließlich einer oder mehrerer Sicherheitssegmentkennungen;
Mittel zum Erzeugen eines Integritätsprüfwerts für das geschützte Segment-Routing-Paket, das von dem bestimmten Segment-Routing-Knoten wie genannt empfangen wird, wobei das genannte Erzeugen des Integritätsprüfwerts ein Anwenden einer kryptografischen Einweg-Hashfunktion auf einen vorher geteilten Schlüssel und eine Vielzahl von geschützten Werten des geschützten Segment-Routing-Pakets einschließt, wobei die Vielzahl von geschützten Werten die Quelladresse und die Zieladresse einschließt; und
wobei die Vorrichtung ferner Mittel zum Verarbeiten des geschützten Segment-Routing-Pakets als Reaktion auf ein Verifizieren der Integrität des geschützten Segment-Routing-Pakets dadurch, dass der Integritätsprüfwert für die genannte eine oder die genannten mehreren Sicherheitssegmentkennungen korrekt ist.

5. Vorrichtung nach Anspruch 4, das ferner Folgendes umfasst:
Mittel zum Ableiten einer Sequenznummer auf der Basis des Werts der Zieladresse oder einer spezifischen Segmentkennung in der Segmentliste des geschützten Segment-Routing-Pakets, das von dem bestimmten Segment-Routing-Knoten empfangen wird; und wobei das gennante Verifizieren der Integrität des geschützten Segment-Routing-Pakets ein Bestimmen einschließt, dass die Sequenznummer ein erwarteter Wert für das geschützte Segment-Routing-Paket ist, das von dem bestimmten Segment-Routing-Knoten empfangen wird.

## Revendications

1. Procédé, consistant à :
recevoir (462), par un nœud de routage par segments particulier par l'intermédiaire d'un réseau, un paquet de routage par segments protégé qui comprend une adresse source et une adresse de destination dans un en-tête de protocole Internet version 6 externe, et un en-tête de routage par segments comprenant une liste de segments incluant un ou plusieurs identifiants de segment de sécurité ;
générer (470) une valeur de contrôle d'intégrité pour ledit paquet de routage par segments protégé reçu par le nœud de routage par segments particulier, ladite génération de la valeur de contrôle d'intégrité consistant à appliquer une fonction de hachage cryptographique unidirectionnelle à une clé pré-partagée et à une pluralité de valeurs protégées du paquet de routage par segments protégé, la pluralité de valeurs protégées incluant l'adresse source et l'adresse de destination ; et
en réponse à la vérification de l'intégrité du paquet de routage par segments protégé par le fait que la valeur de contrôle d'intégrité est correcte pour ledit ou lesdits identifiants de segment de sécurité, traiter (478) en outre, par le nœud de routage par segments particulier, le paquet de routage par segments protégé.

2. Procédé selon la revendication 1,
consistant à dériver un numéro de séquence sur la base de la valeur de l'adresse de destination ou d'un identifiant de segment spécifique dans la liste de segments du paquet de routage par segments protégé reçu par le nœud de routage par segments particulier ; et la vérification de ladite intégrité du paquet de routage par segments protégé consistant à déterminer que le numéro de séquence est une valeur attendue pour le paquet de routage par segments protégé reçu par le nœud de routage par segments particulier.

3. Programme informatique comprenant des instructions qui, lorsqu'elles sont exécutées par un ordinateur, amènent l'ordinateur à exécuter les étapes du procédé selon la revendication 1 ou 2.

4. Appareil pour un nœud de routage par segments particulier, l'appareil comprenant :
un moyen permettant de recevoir, par le nœud de routage par segments particulier par l'intermédiaire d'un réseau, un paquet de routage par segments protégé qui comprend une adresse source et une adresse de destination dans un en-tête de protocole Internet version 6 externe, et un en-tête de routage par segments comprenant une liste de segments incluant un ou plusieurs identifiants de segment de sécurité ;
un moyen permettant de générer une valeur de contrôle d'intégrité pour ledit paquet de routage par segments protégé reçu par le nœud de routage par segments particulier, ladite génération de la valeur de contrôle d'intégrité consistant à appliquer une fonction de hachage cryptographique unidirectionnelle à une clé pré-partagée et à une pluralité de valeurs protégées du paquet de routage par segments protégé, la pluralité de valeurs protégées incluant l'adresse source et l'adresse de destination ; et
l'appareil comprenant en outre un moyen permettant de traiter le paquet de routage par segments protégé, en réponse à la vérification de l'intégrité du paquet de routage par segments protégé par le fait que la valeur de contrôle d'intégrité est correcte pour ledit ou lesdits identifiants de segment de sécurité.

5. Appareil selon la revendication 4, comprenant en outre :
un moyen permettant de dériver un numéro de séquence sur la base de la valeur de l'adresse de destination ou d'un identifiant de segment spécifique dans la liste de segments du paquet de routage par segments protégé reçu par le nœud de routage par segments particulier ; et la vérification de ladite intégrité du paquet de routage par segments protégé consistant à déterminer que le numéro de séquence est une valeur attendue pour le paquet de routage par segments protégé reçu par le nœud de routage par segments particulier.
